# EUROPÄISCHE PATENTSCHRIFT

(11) **EP 2 477 824 B1**
(45) Veröffentlichungstag und Bekanntmachung des Hinweises auf die Patenterteilung: **16.10.2013**
(21) Anmeldenummer: 10747023.9
(22) Anmeldetag: 24.08.2010
(51) Int. Cl.: B60C 11/00

(54) **FAHRZEUGLUFTREIFEN**
VEHICLE TIRE
PNEUMATIQUE DE VÉHICULE

(30) Priorität: 14.09.2009 DE 102009043991
(43) Veröffentlichungstag der Anmeldung: 25.07.2012
(73) Patentinhaber: Continental Reifen Deutschland GmbH, 30165 Hannover (DE)
(72) Erfinder: DE-RIVA-PEREZ, Julian, 33203 Gijon (ES); SAAL, Hilkka, 30167 Hannover (DE); WEBER, Christian, 30826 Garbsen (DE); KÖLLE, Philipp, 30451 Hannover (DE); KRAMER, Thomas, 32049 Herford (DE)
(74) Vertreter: Finger, Karsten
(86) Internationale Anmeldenummer: PCT/EP2010/062280
(87) Internationale Veröffentlichungsnummer: WO 2011/029715

(56) Entgegenhaltungen:
- EP-A1- 1 837 206
- EP-A2- 1 016 555
- DE-A1-102005 045 000
- JP-A- 60 015 203
- US-A- 5 046 542

## Beschreibung

Die Erfindung betrifft einen Fahrzeugluftreifen, insbesondere für Nutzfahrzeuge, mit einer Radialkarkasse, einem mehrlagigen Gürtel und einem Laufstreifen, welcher sich in radialer Richtung aus zwei aus unterschiedlichen Gummimischungen bestehenden Schichten, einer Laufstreifencap und einer Laufstreifenbase, zusammensetzt, wobei die Laufstreifenbase in axialer Richtung betrachtet zumindest nach radial außen weisend einen zentralen Abschnitt und zwei seitliche Abschnitte aufweist, wobei der zentrale Abschnitt aus einer Gummimischung besteht, die eine niedrigere Rückprallelastizität bei 70 °C gemäß DIN 53 512 aufweist als die Gummimischung der beiden seitlichen Abschnitte der Laufstreifenbase.

Es ist üblich, Fahrzeugluftreifen, und zwar sowohl Reifen für Personenkraftwagen als auch für Nutzfahrzeuge, mit einem zweiteiligen Laufstreifen zu versehen, welcher aus einer Laufstreifencap, die beim Abrollen des Reifens mit dem Untergrund in Kontakt tritt, und aus einer Laufstreifenbase besteht. Die Laufstreifencap wird aus einer hinsichtlich des Abriebs optimierten Gummimischung und die Laufstreifenbase aus einer hinsichtlich der Hysterese optimierten Gummimischung gefertigt.

Fahrzeugluftreifen der eingangs genannten Art mit einer zusätzlichen Aufteilung der Laufstreifenbase in über die axiale Breite unterschiedliche Bereiche sind aus dem Stand der Technik bekannt, z. B. aus der EP 1 016 555 A2, der DE 10 2005 045000 A1 und der JP 60 015203 A. Die Aufteilung der Base wird dazu genutzt, die Eigenschaften des Reifens noch besser an die geforderten Bedingungen anzupassen.

Aus der DE 198 50 766 A1 ist es beispielsweise bekannt, den Rollwiderstand eines Fahrzeugluftreifens zu verbessern, indem man die Laufstreifenbase in der Mitte weicher und in den seitlichen Bereichen härter ausgestaltet, wobei die äußeren Abschnitte hysteresereicher, d. h. mit kleinerer Rückprallelastizität, ausgebildet sind.

In der DE 10 2006 012 536 A1 wird ein Fahrzeugluftreifen, insbesondere ein Nutzfahrzeugreifen beschrieben, der zur Verbesserung der Gürtelhaltbarkeit und zur Verringerung des Rollwiderstandes eine geteilte Laufstreifenbase aufweist, die in den seitlichen Abschnitten aus einen Mischung mit einer höheren Wärmeleitfähigkeit gebildet wird. Die Wärmeleitfähigkeit dieser Mischung ist höher als die der Laufstreifencap und die des zentralen Abschnitts der Laufstreifenbase.

Bei Fahrzeugluftreifen, insbesondere bei Nutzfahrzeugreifen, kann es vorkommen, dass Laufstreifenverletzungen, wie z. B. Schnitte oder Risse in der Lauffläche, so tief gehen, dass die Gürtellagen betroffen sind. Die Schnitte reichen dann bis an die Corde des Gürtels heran, was zu Korrosion und Cordbrüchen und damit zu einer verminderten Haltbarkeit des Reifens führen kann. Auch die Runderneuerungsfähigkeit, die bei Nutzfahrzeugreifen eine wichtige Rolle spielt, wird durch solche tief gehenden Schnitte oder Risse beeinträchtigt oder sogar ganz verhindert.

Der Erfindung liegt die Aufgabe zugrunde, bei einem Reifen der eingangs genannten Art die Haltbarkeit des Reifens zu verbessern und bei Nutzfahrzeugreifen die Runderneuerungsfähigkeit sicher zu stellen.

Gelöst wird die gestellte Aufgabe erfindungsgemäß durch einen Fahrzeugluftreifen gemäß Anspruch 1.

Es wurde überraschend festgestellt, dass eine Gummimischung mit geringer Rückprallelastizität bei 70 °C (hysteresereich) in der Laufstreifenbase Verletzungen in der Laufstreifencap vermindert. Die Gummimischung der Base gibt nach. Gleichzeitig werden auch Schnitte oder Risse bis zur Gürtellage vermindert. Da sich die Gummimischung mit der geringen Rückprallelastizität und damit verbundenem höherem Wärmeaufbau nur in der Mitte der Laufstreifens befindet, vorzugsweise im Bereich der Profilrillen, und sich an den seitlichen Abschnitten der Laufstreifenbase eine Mischung mit höherer Rückprallelastizität (hystreserearm) und damit geringerem Wärmeaufbau befindet, gelingt es die temperaturkritischen Bereiche den Reifens, nämlich die Gürtelkante, kühler zu halten. Dadurch wird die Haltbarkeit des Reifens verbessert. Der mittlere Bereich, der besonders anfällig für Verletzungen ist, wird durch die Mischung mit der niedrigen Rückprallelastizität geschützt. Die Randbereiche werden vor Überhitzung durch eine Mischung mit geringem Wärmeaufbau geschützt. Bei Nutzfahrzeugreifen kann durch den erfindungsgemäßen Aufbau der Laufstreifenbase die Runderneuerungsfähigkeit sicher gestellt werden.

Die Laufstreifenbase kann gemäß der Erfindung unterschiedlich aufgebaut sein, wichtig ist nur, dass sie in axialer Richtung betrachtet zumindest nach radial außen weisend einen zentralen Abschnitt und zwei seitliche Abschnitte aufweist. Die Mischungen für den zentralen Abschnitt und die seitlichen Abschnitte können sich jeweils über die gesamte Stärke (Dicke) der Laufstreifenbase erstrecken, wobei die Mischungen für die beiden seitlichen Abschnitte auch auf unterschiedlichen Mischungen, abgestimmt auf Innen- und Außenseite des Reifens, basieren können. Die Mischung des zentralen Abschnitts kann sich dabei aber auch unterhalb der seitlichen Abschnitte bis zum Rand der Laufstreifenbase erstrecken. Es ist auch möglich, dass sich die Mischung für die seitlichen Abschnitte unterhalb des mittleren Abschnitts entlang erstreckt.

Um einen besonders guten Schutz von Verletzungen der Gürtellagen bei gleichzeitig geringer Beeinträchtigung im Bereich der Gürtelkanten durch Erwärmung zu erzielen, hat es sich als vorteilhaft erwiesen, dass die Mischung des zentralen Abschnittes der Laufstreifenbase eine um mindestens 5 % niedrigere Rückprallelastizität bei 70 °C aufweist als die Gummimischung der beiden seitlichen Abschnitte der Laufstreifenbase.

Gemäß der Erfindung weist die Mischung des zentralen Abschnittes der Laufstreifenbase eine niedrigere Shore-A-Härte bei Raumtemperatur gemäß DIN 53 505, und zwar eine um mindestens 2 Shore-A-Härte-Punkte niedrigere Shore-A-Härte, auf als die Gummimischung der beiden seitlichen Abschnitte der Laufstreifenbase. Auf diese Weise kann der Gürtel unterhalb von Profilrillen vor Schnitten z. B. durch Steine geschützt werden. Die Steine können in die weichere Mischung eindringen, aber sie zerstören diese nicht.

Bevorzugt weist die Mischung des zentralen Abschnitts der Laufstreifenbase für gute Vermeidung von Gürtelverletzungen eine Shore-A-Härte bei Raumtemperatur von maximal 55 Shore A auf.

Da die Einschnitte von Gegenständen, insbesondere von Steinen, besonders im Bereich der Umfangsrillen zum Tragen kommen, wo eine geringe Menge an Gummi den Gürtel bedeckt, hat es sich als sinnvoll erwiesen, wenn sich der zentrale Abschnitt der Laufstreifenbase sich zumindest bis zu den axial äußeren Umfangsrillen erstreckt, um alle Umfangsrillen des Reifens zu schützen.

Gemäß einer bevorzugten Weiterbildung der Erfindung weist die Laufstreifenbase eine Stärke von mindestens 4 mm auf. Mit dieser Menge an Gummimaterial in der Laufstreifenbase kann die Haltbarkeit und Runderneuerungsfähigkeit besonders gut verbessert werden.

Die Rückprallelastizität der Mischungen für die Laufstreifenbase kann auf unterschiedliche Weise beeinflusst werden. So kann beispielsweise durch spezielle Kautschuke, spezielle Vernetzungssysteme, den Füllstoffgehalt, beispielsweise den Rußgehalt, und/oder die Anbindung des Füllstoffs an die umgebende Kautschukmatrix Einfluss auf die Rückprallelastizität genommen werden.

Gemäß einer bevorzugten Ausgestaltung der Erfindungen weisen die Gummimischung des zentralen Abschnitts der Laufstreifenbase einen Füllstoffgehalt von mehr als 50 phr und die Gummimischung der beiden seitlichen Abschnitte einen Füllstoffgehalt von weniger als 45 phr auf. Als Füllstoffe können dabei z. B. Ruß und/oder Kieselsäure zum Einsatz kommen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Gummimischungen für die Abschnitte der Laufstreifenbase basieren in der Regel auf Dienkautschuken. Zu den Dienkautschuken zählen alle Kautschuke mit einer ungesättigten Kohlenstoffkette, die sich zumindest teilweise von konjugierten Dienen ableiten. Eingesetzt werden häufig Naturkautschuk (NR), synthetisches Polyisopren (IR), Polybutadien (BR), Styrol-Butadien-Copolymer (SBR). Diese Dienelastomere lassen sich gut verarbeiten und ergeben in den vulkanisierten Reifen gute Reifeneigenschaften.

Die Gummimischungen können neben Kautschuk und Füllstoffen weitere übliche Zuschlagstoffe in üblichen Gewichtsteilen enthalten. Zu diesen Zuschlagstoffen zählen Weichmacher, Silan-Kupplungsagenzien, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Mischungen werden mit Schwefel und/oder Schwefelspendern in Anwesenheit von Vulkanisationsbeschleunigern vernetzt.

Die Herstellung der erfindungsgemäßen Fahrzeugluftreifen erfolgt nach üblichen, dem Fachmann bekannten Verfahren, wobei der Laufstreifen mit der erfindungsgemäßen Ausgestaltung mit entsprechenden Extrudern und Extrudermundstücken erzeugt und auf den Reifenrohling aufgelegt wird. Auch ein Verfahren, bei dem schmaler Mischungstreifen zur Erzeugung des Laufstreifens auf den Rohling aufgespult wird, ist einsetzbar.

Die Erfindung soll nun anhand der Figur und der Tabelle 1 näher erläutert werden.

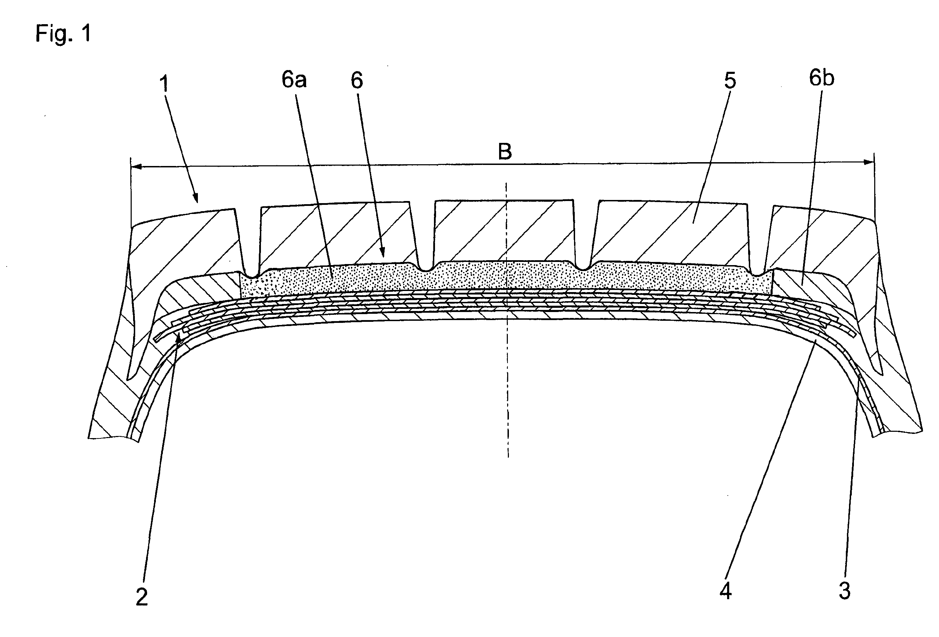

Die einzige Zeichnungsfigur, Fig. 1, zeigt einen Querschnitt durch den Laufstreifenbereich eines erfindungsgemäßen Fahrzeugluftreifens für ein Nutzfahrzeug.

Fig. 1 zeigt von den üblichen Bauteilen eines Luftreifens für Nutzfahrzeuge einen Laufstreifen 1, einen Gürtel 2 mit vorzugsweise vier Gürtellagen bestehend aus in Gummi eingebetteten, vorzugsweise aus Stahlkord bestehenden Festigkeitsträgern, einer ebenfalls mit Festigkeitsträgern verstärkten Radialkarkasse 3 und einer luftdichten Innenschicht 4. Von den Seitenwänden des Reifens sind lediglich die axial äußeren Endabschnitte dargestellt. Nicht gezeigt sind die Wulstbereiche mit Wulstkernen und Kernprofilen.

Der Laufstreifen 1 besteht aus einer radial äußeren Gummischicht, der Laufstreifencap 5 und einer radial inneren Gummischicht, der Laufstreifenbase 6. Unterhalb der Laufstreifenbase 6 kann noch eine nicht dargestellte Unterplatte vorgesehen werden. Die Laufstreifenbase 6 weist eine im Wesentlichen konstante Stärke von ca. 4,5 mm auf und ist in axialer Richtung dreigeteilt, sodass sie aus einem zentralen Abschnitt 6a und zwei seitlichen Abschnitten 6b besteht. Der zentrale Abschnitt 6a erstreckt sich zentrisch zur Reifenmitte bis über die beiden äußeren Umfangsrillen. Die beiden seitlichen Abschnitte 6b sind bei der dargestellten Ausführungsform gleich breit und symmetrisch zur Reifenmitte angeordnet. Zwischen dem Grund der Umfangsrillen und der Laufstreifenbase 6 kann sich auch noch eine dünne Schicht aus der Gummimischung der Laufstreifencap 5 befinden.

Die beiden seitlichen Abschnitte 6b bestehen aus einer Gummimischung mit einer höheren Rückprallelastizität bei 70 °C als die Gummimischung des zentralen Abschnitts 6a. Auch ist die Mischung der seitlichen Abschnitte 6b härter als die des zentralen Abschnitts 6a. Für die Laufstreifencap 5 kann zur Reduzierung der verwendeten Zahl der Mischungen auch die gleiche Mischung wie für die seitlichen Abschnitte 6b verwendet werden.

In der Tabelle 1 sind Beispielsmischungen für die Mischung des zentralen Abschnitts 6a und der seitlichen Abschnitte 6b mit ihren charakteristischen Eigenschaften angegeben.

Die Mischungsherstellung erfolgte unter üblichen Bedingungen unter Herstellung einer Grundmischung und anschließend der Fertigmischung in einem Labortangentialmischer. Es wurden die Mooney-Viskositäten ML (1+4) bei 100 °C mit Hilfe eines rotorlosen Vulkameters (MDR = Moving Disc Rheometer) gemäß DIN 53 523 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte (Modul) 300 % Dehnung bei Raumtemperatur gemäß DIN 53 504
- Reißenergie pro verformtem Volumen bei Raumtemperatur gemäß High Speed Tear Energy Test nach DIN EN 10 045

**Tabelle 1**

| **Bestandteile** | **Einheit** | **Mischung für zentralen Abschnitt 6a** | **Mischung für seitliche Abschnitte 6b** |
|---|---|---|---|
| Naturkautschuk | phr | 85 | 100 |
| BR^{a} | phr | 15 | - |
| Ruß N220 | phr | 45 | 36 |
| Kieselsäure | phr | 12 | 5 |
| Weichmacheröl | phr | 1 | 1 |
| Alterungsschutzmittel | phr | 2,5 | 2,5 |
| Ozonschutzwachs | phr | 1 | 1 |
| Stearinsäure | phr | 2 | 2 |
| Zinkoxid | phr | 3 | 3 |
| Beschleuniger | phr | 0,7 | 1,6 |
| Schwefel | phr | 0,7 | 1,4 |

| **Eigenschaften** | | | |
|---|---|---|---|
| Härte bei RT | ShoreA | 54,2 | 56,3 |
| Härte bei 70 °C | ShoreA | 47,1 | 53,5 |
| Rückprallelast. bei RT | % | 46,0 | 62,9 |
| Rückprallelast. bei 70 °C | % | 50,0 | 72,4 |
| Zugfestigkeit bei RT | MPa | 15,6 | 24,4 |
| Reißdehnung bei RT | % | 540 | 532 |
| Modul 300 % | MPa | 6,6 | 10,5 |
| Reißenergie pro verformtem Volumen bei RT | MJ/m³ | 7 | 5 |

| | | | |
|---|---|---|---|
| ^{a}High-cis Polybutadien | | | |

Ferner wurden Versuchsnutzfahrzeugreifen der Dimension 315/80 R22,5 mit einer erfindungsgemäßen Laufstreifenbase mit den Mischungen der Tabelle 1 hergestellt. Dabei stellte sich nach Analyse der Reifenabschnitte nach einer Laufleistung von ca. 2000 km heraus, dass keine Schnitte vorhanden waren, die bis auf den Stahlcord reichten. Dies war bei herkömmlichen Nutzfahrzeugreifen ohne Base oder mit einer durchgängigen Base aus der Mischung für die seitlichen Abschnitte sehr häufig zu beobachten. Die vorhandenen Schnitte beschränkten sich bei dem erfindungsgemäßen Reifen auf viele kleine Schnitte bis maximal 5 mm Länge und wenig große Schnitte, die aber nicht bis zum Stahlcord der radial äußersten Gürtellage reichten. Auf diese Weise hat der Reifen eine höhere Haltbarkeit und bleibt rundemeuerungsfähig.

## Patentansprüche

1. Fahrzeugluftreifen, insbesondere für Nutzfahrzeuge, mit einer Radialkarkasse (3), einem mehrlagigen Gürtel (2) und einem Laufstreifen (1), welcher sich in radialer Richtung aus zwei aus unterschiedlichen Gummimischungen bestehenden Schichten, einer Laufstreifencap (5) und einer Laufstreifenbase (6), zusammensetzt, wobei die Laufstreifenbase (6) in axialer Richtung betrachtet zumindest nach radial außen weisend einen zentralen Abschnitt (6a) und zwei seitliche Abschnitte (6b) aufweist, wobei der zentrale Abschnitt (6a) aus einer Gummimischung besteht, die eine niedrigere Rückprallelastizität bei 70 °C gemäß DIN 53 512 aufweist als die Gummimischung der beiden seitlichen Abschnitte (6b) der Laufstreifenbase (6),
**dadurch gekennzeichnet,**
**dass** die Mischung des zentralen Abschnitt (6a) der Laufstreifenbase (6) eine um mindestens 2 Shore-A-Härte-Punkte niedrigere Shore-A-Härte bei Raumtemperatur aufweist als die Gummimischung der beiden seitlichen Abschnitte (6b) der Laufstreifenbase (6).

2. Fahrzeugluftreifen nach Anspruch 1, **dadurch gekennzeichnet, dass** die Mischung des zentralen Abschnittes (6a) der Laufstreifenbase (6) eine um mindestens 5 % niedrigere Rückprallelastizität bei 70 °C aufweist als die Gummimischung der beiden seitlichen Abschnitte (6b) der Laufstreifenbase (6).

3. Fahrzeugluftreifen nach einem der Ansprüche 1 oder 2, **dadurch gekennzeichnet, dass** die Mischung des zentralen Abschnittes (6a) der Laufstreifenbase (6) eine Shore-A-Härte bei Raumtemperatur von maximal 55 Shore A aufweist.

4. Fahrzeugluftreifen nach einem der Ansprüche 1 bis 3, **dadurch gekennzeichnet, dass** der zentrale Abschnitt (6a) der Laufstreifenbase (6) sich zumindest bis zu den axial äußeren Umfangsrillen erstreckt.

5. Fahrzeugluftreifen nach einem der Ansprüche 1 bis 4, **dadurch gekennzeichnet, dass** die Laufstreifenbase (6) eine Stärke von mindestens 4 mm aufweist.

6. Fahrzeugluftreifen nach einem der Ansprüche 1 bis 5, **dadurch gekennzeichnet, dass** die Gummimischung des zentralen Abschnitts (6a) der Laufstreifenbase (6) einen Füllstoffgehalt von mehr als 50 phr aufweist und die Gummimischung der beiden seitlichen Abschnitte (6b) der Laufstreifenbase (6) einen Füllstoffgehalt von weniger als 45 phr aufweist.

## Claims

1. Vehicle pneumatic tyre, in particular for utility vehicle, having a radial carcass (3), a multi-layer belt (2) and a tread (1) which is composed, in a radial direction, of two layers which are composed of different rubber mixtures, a tread cap (5) and a tread base (6), wherein the tread base (6) has, when viewed in the axial direction, a central section (6a) and two lateral sections (6b) at least pointing radially outward, wherein the central section (6a) is composed of a rubber mixture which at 70°C according to DIN 53 512 has a lower rebound elasticity than the rubber mixture of the two lateral sections (6b) of the tread base (6),
**characterized**
**in that** the mixture of the central section (6a) of the tread base (6) has a Shore A hardness at room temperature which is lower by at least two Shore A hardness points than the rubber mixture of the two lateral sections (6b) of the tread base (6).

2. Vehicle pneumatic tyre according to Claim 1, **characterized in that** the mixture of the central section (6a) of the tread base (6) has a rebound elasticity at 70°C which is lower by at least 5% than the rubber mixture of the two lateral sections (6b) of the tread base (6).

3. Vehicle pneumatic tyre according to one of Claims 1 and 2, **characterized in that** the mixture of the central section (6a) of the tread base (6) has a Shore A hardness at room temperature of 55 Shore A at maximum.

4. Vehicle pneumatic tyre according to one of Claims 1 to 3, **characterized in that** the central section (6a) of the tread base (6) extends at least as far as the axially outer circumferential grooves.

5. Vehicle pneumatic tyre according to one of Claims 1 to 4, **characterized in that** the tread base (6) has a thickness of at least 4 mm.

6. Vehicle pneumatic tyre according to one of Claims 1 to 5, **characterized in that** the rubber mixture of the central section (6a) of the tread base (6) has a filler content of more than 50 phr, and the rubber mixture of the two lateral sections (6b) of the tread base (6) has a filler content of less than 45 phr.

## Revendications

1. Pneumatique de véhicule, en particulier pour véhicules utilitaires, comprenant une carcasse radiale (3), une ceinture à plusieurs couches (2) et une bande de roulement (1) qui est composée dans la direction radiale de deux couches constituées de mélanges de caoutchouc différents, d'un recouvrement de bande de roulement (5) et d'une base de bande de roulement (6), la base de bande de roulement (6), considérée dans la direction axiale, comprenant une partie centrale (6a) et deux parties latérales (6b) de manière tournée au moins radialement vers l'extérieur, la partie centrale (6a) étant constituée d'un mélange de caoutchouc qui présente une élasticité de rebondissement à 70 °C conformément à la norme DIN 53 512 qui est inférieure à celle du mélange de caoutchouc des deux parties latérales (6b) de la base de bande de roulement (6),
**caractérisé en ce que**
le mélange de la partie centrale (6a) de la base de bande de roulement (6) présente une dureté Shore A à température ambiante qui est inférieure d'au moins deux points de dureté Shore A à celle du mélange de caoutchouc des deux parties latérales (6b) de la base de bande de roulement (6).

2. Pneumatique de véhicule selon la revendication 1, **caractérisé en ce que** le mélange de la partie centrale (6a) de la base de bande de roulement (6) présente une élasticité de rebondissement à 70 °C qui est inférieure d'au moins 5 % à celle du mélange de caoutchouc des deux parties latérales (6b) de la base de bande de roulement (6).

3. Pneumatique de véhicule selon la revendication 1 ou 2, **caractérisé en ce que** le mélange de la partie centrale (6a) de la base de bande de roulement (6) présente une dureté Shore A à température ambiante d'au maximum 55 Shore A.

4. Pneumatique de véhicule selon l'une quelconque des revendications 1 à 3, **caractérisé en ce que** la partie centrale (6a) de la base de bande de roulement (6) s'étend au moins jusqu'aux rainures périphériques axialement extérieures.

5. Pneumatique de véhicule selon l'une quelconque des revendications 1 à 4, **caractérisé en ce que** la base de bande de roulement (6) présente une épaisseur d'au moins 4 mm.

6. Pneumatique de véhicule selon l'une quelconque des revendications 1 à 5, **caractérisé en ce que** le mélange de caoutchouc de la partie centrale (6a) de la base de bande de roulement (6) présente une teneur en charge de plus de 50 phr et le mélange de caoutchouc des deux parties latérales (6b) de la base de bande de roulement (6) présente une teneur en charge de moins de 45 phr.
